# EUROPÄISCHE PATENTANMELDUNG

(11) **EP 0 897 054 A1**
(43) Veröffentlichungstag der Anmeldung: **17.02.1999**
(21) Anmeldenummer: 98114180.7
(22) Anmeldetag: 29.07.1998
(51) Int. Cl.: F02D 41/14, F02D 41/22

(54) **Verfahren zur Vertauschprüfung von Lambdasonden**

(30) Priorität: 11.08.1997 DE 19734670
(71) Anmelder: Daimler-Benz Aktiengesellschaft, 70546 Stuttgart (DE)
(72) Erfinder: Könders, Johannes, 71126 Gäufelden (DE)

(57) **Zusammenfassung**

Die Erfindung betrifft eine mehrzylindrige Brennkraftmaschine, deren Zylinder mindestens zwei separaten Abgasleitungen mit jeweils einem Katalysator verteilt zugeordnet sind, mit zumindest einer Lambdasonde pro Abgasleitung und mit einer daran angeschlossenen Lambda-Regeleinrichtung.

Es wird vorgeschlagen, daß Luft mittels einer Luftguelle einzeln zumindest einer Abgasleitung über zumindest einen Luftanschluß vor der Lambdasonde zuführbar ist.

## Beschreibung

Die Erfindung betrifft ein Verfahren zur Vertauschprüfung von Lambdasonden nach dem Oberbegriff des Patentanspruchs 1.

Die Zylinder mehrzylindriger Brennkraftmaschinen werden häufig in mehreren Reihen, sogenannten Zylinderbänken, aus jeweils 2, 4 oder 6 Zylindern nebeneinander angeordnet. In der Regel beschränkt man sich auf zwei Reihen, deren Längsmittelebenen einen V-Winkel einschließen.

Je mehr Zylinder vorgesehen sind, desto kleiner ist der zeitliche Zundabstand der Zylinder und desto gleichmäßiger ist der Drehmomentverlauf pro Umdrehung. Damit sich die Auslässe der einzelnen Zylinder nicht gegenseitig stören, werden mehrere Auslaßleitungen vorgesehen, denen jeweils Zylinder zugeordnet werden, die zueinander einen genügenden Zündabstand haben. Bei mehrreihigen Hubkolben-Brennkraftmaschinen wird in der Regel für jede Zylinderbank eine Abgasleitung vorgesehen.

Sollen die Abgaswerte der Brennkraftmaschine mit einer Lambda-Regelung überwacht werden, d.h. daß das Luft/Kraftstoffgemisch abhängig von Betriebsgrößen und Abgaswerten eingestellt wird, ist zu beachten, daß jede Zylinderbank individuellen Störgrößen unterliegt, wie beispielsweise Leckluftraten und unterschiedliche Durchflußrate der Kraftstoffeinrichtungen. Deshalb wird jeder Zylinderbank ein separater Lambda-Regelkreis zugeordnet. Ein Lambda-Regelkreis weist zumindest eine Lambdasonde in der Abgasleitung und eine daran angeschlossene Regeleinheit für die Zylinderbank auf.

Es besteht die Gefahr, daß die Lambdasonden vertauscht an die Regeleinheiten angeschlossen werden. Ist beispielsweise bei zwei Zylinderbanken mit zwei Lambda-Regelkreisen die Lambdasonde der ersten Abgasleitung an dem zweiten Lambda-Regelkreis angeschlossen und umgekehrt die Lambdasonde der zweiten Abgasleitung an dem ersten Lambda-Regelkreis, wird zwar von der zweiten Lambdasonde eine Fettvertrimmung der ersten Zylinderbank richtig erkannt, jedoch an die zweite Regeleinrichtung der zweiten Zylinderbank weitergeleitet. Die zweite Regeleinrichtung verstellt dadurch die zweite Zylinderbank in Richtung mager, was von der ersten Lambdasonde erfaßt und an die erste Regeleinrichtung der ersten Zylinderbank weitergeleitet wird. Dies führt zum Abmagern der zweiten und zum Überfetten der ersten Zylinderbank bis zum maximalen Regelhub der Lambda-Regelkreise. Die Brennkraftmaschine läuft unruhig und der Fahrkomfort leidet.

Grundsätzlich ist es möglich, unverwechselbare Bauteile oder Anschlüsse für jede Zylinderbank bzw. Abgasleitung zu entwikkeln. Um die Variantenzahl gering zu halten, sollen jedoch für die Abgasleitungen gleiche Lambdasonden verwendet werden.

Aus der DE 44 23 344 A1 ist eine Vertauschprüfung der Lambdasonden bekannt. Dabei werden Einspritzventile einer der beiden Zylinderbänke mindestens solange abgeschaltet, daß die Lambdasonden reagieren bzw. umschalten können. Das Lambdasonden-Signal wird am Ende der Abschaltzeit der Einspritzventile mit einem vorgegebenen Schwellwert verglichen. Stimmt das Lambdasonden-Signal nicht mit dem Schwellwert überein, sind die Lambdasonden vertauscht angeschlossen. Die bekannte Vertauschprüfung kann nur bei Brennkraftmaschinen angewendet werden, bei denen die Einspritzventile zumindest einer Zylinderbank abschaltbar sind.

Aus der MTZ, Motortechnische Zeitschrift 52, 1991, Seite 221, ist eine Hubkolbenbrennkraftmaschine mit zwölf Zylindern bekannt, die in zwei v-förmig zueinander angeordneten Zylinderbänken angeordnet sind. Jede Zylinderbank ist bezüglich Saug- und Auspuffanlage eigenständig. So ist jeder Zylinderbank ein Katalysator mit einer stromaufwärts angeordneten Lambdasonde zugeordnet. Eine Einspritzelektronik steuert eine Sekundärluftpumpe an, um während der Warmlaufphase Luft in die Auslaßkanäle einzublasen. In Verbindung mit dem heißen Abgas erfolgt eine Nachoxydation im Abgasstrang, welche einerseits die Schadstoffe reduziert, andererseits durch Exothermie die Abgastemperatur erhöht. Die Luftblasung kann über ein für beide Zylinderbänke gemeinsames Abschaltventil insgesamt unterbrochen werden.

Aus der DE 42 25 361 A1 ist ein Verfahren zur Funktionsprüfung der Sekundärluftzuführung in das Abgassystem einer Brennkraftmaschine bekannt. Die Brennkraftmaschine besitzt nur eine Zylinderreihe mit einem Abgassystem und einer Lambdasonde. Nach dem Start der Brennkraftmaschine wird die Sekundärluftpumpe und das Steuergerät aktiviert und das Signal der Lambdasonde für die Funktionsüberprüfung der Sekundärluftzuführung ausgewertet.

Aufgabe der Erfindung ist es, eine ein Verfahren zu schaffen, mit dem vertauscht angeschlossene Lambdasonden schnell und einfacher erkannt werden können, sowie geeignete Brennkraftmaschinen zur Durchführung des Verfahrens vorzuschlagen.

Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Erfindungsgemaß wird während einer Prüfzeit, die mindestens der Reaktionszeit bzw. Umschaltzeit der Lambdasonde entspricht, Luft mittels einer Luftquelle einzeln zumindest einer Abgasleitung über zumindest einen Luftanschluß vor der Lambdasonde zugeführt, vorzugsweise zwischen Auslaßseite der Brennkraftmaschine und Lambdasonde. Unabhängig von dem tatsächlichen Luft/Kraftstoffgemisch vor der Brennkraftmaschine und von den Einspritzventilen kann der Abgaswert schnell um einen großen Bereich verändert werden, ohne die Gefahr, daß ein in einer Abgasleitung befindlicher Katalysator zerstört wird. Der Weg zwischen der Luftanschlußstelle und der Lambdasonde ist kurz und das mit Luft angereicherte Abgas wirkt unmittelbar ohne zwischengeschaltete Aggregate auf die Lambdasonde. Der veränderte Abgaswert kann dadurch von der Lambdasonde schnell und eindeutig erfaßt und zu einem eindeutigen Signal ausgewertet werden. Die Vertauschprüfung ist zeitlich kurz und sicher.

Weitere Einzelheiten der Erfindung sowie die daraus resultierenden Vorteile sind der nachfolgenden Beschreibung von Ausführungsbeispielen zu entnehmen. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

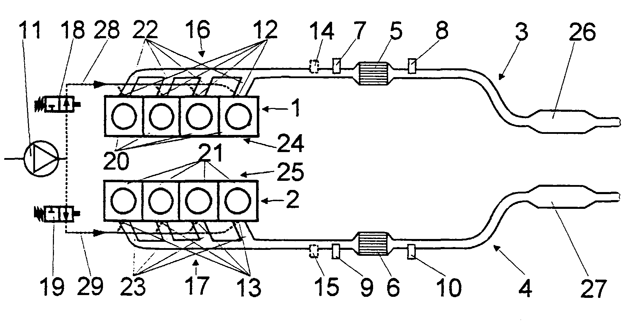

Fig. 1 zeigt schematisch einen Ausschnitt einer Brennkraftmaschine mit zwei Zylinderbänken und zwei getrennten Abgasleitungen.

Die Zylinderbänke 1, 2 werden jeweils von vier Zylindern 20, 21 gebildet. Möglich sind auch mehr oder weniger Zylinder 20, 21 pro Zylinderbank 1, 2, beispielsweise zwei, drei oder sechs. Auf einer nicht naher dargestellten Einlaßseite 24, 25 der Brennkraftmaschine wird ein Luft/Kraftstoffgemisch den Zylindern 20, 21 zugeführt. Nach dem Zündvorgang wird das verbrannte Luft/Kraftstoffgemisch als Abgas auf Auslaßseiten 16, 17 der Brennkraftmaschine jeweils von den Zylindern 20, 21 über Abgaskrümmer 22, 23 abgeführt. Die Abgasskrümmer 22, 23 sind jeweils pro Zylinderbank 1, 2 zu einer Abgasleitung 3, 4 zusammengeführt. In jeder Abgasleitung 3, 4 befindet sich ein Katalysator 5, 6, vor und hinter denen jeweils eine Lambdasonde 7, 8, 9, 10 angeordnet ist. Dabei dient die Lambdasonde 7, 9 vor dem Katalysator 5, 6 der eigentlichen Regelung, wahrend die Lambdasonde 8, 10 hinter dem Katalysator 5, 6 zur Überwachung des Katalysators 5, 6 und der vorderen Lambdasonde 7, 9 dient. Möglich ist jedoch auch nur eine Lambdasonde 7, 9 pro Abgasleitung 3, 4. Nach den Lambdasonden 8, 10 hinter den Katalysatoren 5, 6 schließt sich stromabwärts jeweils ein Abgastopf 26, 27 an.

Um zu überprüfen, ob die Lambdasonden 7, 8, 9, 10 vertauscht bzw. korrekt angeschlossen sind, kann erfindungsgemäß Luft mittels einer Luftguelle 11 separat einer Abgasleitung 3, 4 über Luftanschlüsse 12, 13 vor den Lambdasonden 7, 8, 9, 10 zugeführt werden. Bei dem gezeigten Ausführungsbeispiel wird als Luftguelle 11 eine Luftpumpe genutzt, die in erster Linie dazu verwendet wird, unmittelbar an den Auslaßseiten 16, 17 der Zylinder 20, 21 Luft zuzuführen, den Verbrennungsvorgang nach den Zylindern 20, 21 weiter zu fördern und dadurch die Abgaswerte zu verbessern. Derartige Luftpumpen werden häufig in den USA eingesetzt.

Soll eine Vertauschprüfung durchgeführt werden, wird eine von zwei Zuführleitungen 28, 29 der Luftguelle 11 zu den Zylindern 20, 21 mittels eines Ventils 18, 19 unterbrochen. Dadurch entsteht auf der Seite, auf der die Luftzufuhr unterbrochen wird, ein fetterer Abgaswert und auf der anderen Seite ein magerer Abgaswert. Nach einer Reaktionszeit bzw. Umschaltzeit der Lambdasonde 7, 8, 9, 10 werden die Lambdasonden-Signale mit einem vorgegebenen Schwellwert verglichen. Stimmen die Lambdasonden-Signale nicht mit den Schwellwerten überein, d.h. zeigen die Lambdasonden 7, 8, 9, 10 nicht die entsprechenden Abgaswerte, sondern seitenverkehrte Abgaswerte an, sind die Lambdasonden 7, 8, 9, 10 vertauscht angeschlossen.

Ein Ventil 18, 19 reicht aus, um in den Abgasleitungen 3, 4 verschiedene Abgaswerte zu erzeugen. Es kann jedoch von Vorteil sein, wenn mit jeweils einem Ventil 18, 19 auf jeder Seite in jeder Abgasleitung 3, 4 ein magerer und eine fetterer Abgaswert erzeugt werden kann, beispielsweise um neben einer Vertauschprüfung gleichzeitig die Funktion der Lambdasonden 7, 8, 9, 10 im fetteren und im mageren Bereich zu überprüfen, ohne in die Regelung des Luft/Kraftstoffgemisches eingreifen zu müssen.

Indem schon vorhandene Luftguellen 11 der Brennkraftmaschine genutzt werden, um die Luft für die Vertauschprüfung einer Abgasleitung 3, 4 zuzuführen, sind nur wenig zusätzliche Bauteile erforderlich und es kann mit einem geringen konstruktiven Aufwand kostengünstig die Möglichkeit geschaffen werden, den Anschluß der Lambdasonden 7, 8, 9, 10 zu überprüfen. Die Prüfzeit kann insbesondere auch leicht auf die Reaktionszeit bzw. Umschaltzeit der Lambdasonden 8, 10 hinter den Katalysatoren 5, 6 angepaßt werden, die in der Regel durch den zwischengeschalteten Katalysator später reagieren als die vorderen Lambdasonden 7, 9.

Außer der Luftguelle 11 zur Verbesserung der Abgaswerte können auch andere schon vorhandene Luftguellen genutzt werden, unterschiedliche Abgaswerte in den verschiedenen Abgasleitungen 3, 4 zu erzeugen, indem Luft nur einer Abgasleitung 3 oder 4 zugeführt wird, wie beispielsweise Turbolader oder sonstige Lüfter.

Bedingt durch den Aufbau der Brennkraftmaschine kann es teilweise günstig sein, die Luft für die Vertauschprüfung schon auf der Einlaßseite 24, 25 der Brennkraftmaschine zuzuführen.

Grundsätzlich ist es jedoch vorteilhaft, möglichst nahe an den Lambdasonden 7, 8, 9, 10 die Luft, d.h. zumindest auf der Auslaßseite 16, 17 der Brennkraftmaschine zuzuführen, wodurch der Abgaswert vor den Lambdasonden 7, 8, 9, 10 mit geringem Aufwand um einen großen Bereich variiert und dieser anschließend unmittelbar von den Lambdasonden 7, 8, 9, 10 ohne große Zeitverzögerung erfaßt werden kann.

Bei einer erfindungsgemaßen Ausgestaltung wird anstatt einer vorhandenen Luftguelle 11 eine externe nicht näher dargestellte Luftguelle genutzt, die zumindest an einer Abgasleitung 3, 4 vor den Lambdasonden 7, 8, 9, 10 an einem Luftanschluß 14, 15 anschließbar ist. Im Ausführungsbeispiel ist in jeder Abgasleitung 3, 4 kurz vor der vorderen Lambdasonde 7, 9 ein Luftanschluß 14, 15 angeordnet, wodurch gleichzeitig günstig eine Vertauschprüfung und eine Funktionsprüfung durchgeführt werden kann. Je näher der Luftanschluß 14, 15 vor den Lambdasonden 7, 8, 9, 10 angeordnet ist, desto schneller und deutlicher kann der veränderte Abgaswert von den Lambdasonden 7, 8, 9, 10 erfaßt und vertauscht angeschlossene Lambdasonden 7, 8, 9, 10 erkannt werden. Um die hinteren Lambdasonden 8, 10 zu überprüfen, kann es auch besonders günstig sein, hinter dem Katalysator 5, 6 einen Luftanschluß vorzusehen.

Nach der Montage der Lambdasonden 7, 8, 9, 10 oder bei Reparaturen, kann an einem der Luftanschlüsse 14, 15 eine externe Luftguelle angeschlossen werden, um eine Vertauschprüfung durchzuführen.

Möglich ist auch, von einer Pumpe ein anderes Gas wie Luft der Abgasleitung 3 oder 4 zuzuführen, beispielsweise um eine Vertauschprüfung bzw. eine Funktionsprüfung durchzuführen, ohne daß hierzu die Brennkraftmaschine gestartet werden braucht.

## Patentansprüche

1. Verfahren zur Vertauschprüfung von Lambdasonden bei einer mehrzylindrigen Brennkraftmaschine, deren Zylinder mindestens zwei separaten Abgasleitungen mit jeweils einem Katalysator verteilt zugeordnet sind, mit zumindest einer Lambdasonde pro Abgasleitung und mit einer daran angeschlossenen Lambda-Regeleinrichtung, dadurch gekennzeichnet, daß während einer Prüfzeit, die mindestens der Reaktionszeit bzw. Umschaltzeit der Lambdasonde (7, 8, 9, 10) entspricht, Luft mittels einer Luftguelle (11) einzeln zumindest einer Abgasleitung (3, 4) über zumindest einen Luftanschluß (12, 13, 14, 15) vor der Lambdasonde (7, 8, 9, 10) zugeführt und das Lambdasonden-Signal mit einem Schwellwert verglichen wird.

2. Brennkraftmaschine zur Durchführung des Verfahrens nach Anspruch 1, dadurch gekennzeichnet, daß der Luftanschluß (12, 13, 14, 15) zwischen Auslaßseite (16, 17) der Brennkraftmaschine und der Lambdasonde (7, 8, 9, 10) angeordnet ist.

3. Brennkraftmaschine nach Anspruch 2, dadurch gekennzeichnet, daß eine bereits mit einer Funktion belegte Luftguelle (11) genutzt wird.

4. Brennkraftmaschine nach Anspruch 3, dadurch gekennzeichnet, daß die Luftquelle (11) eine Luftpumpe ist, die zur Verbesserung der Abgaswerte eingesetzt ist und die Luftzufuhr zumindest zu einer Abgasleitung (3, 4) gesperrt werden kann.

5. Brennkraftmaschine nach Anspruch 1 oder 2, dadurch gekennzeichnet, daß zumindest eine Abgasleitung (3, 4) vor der Lambdasonde (7, 8, 9, 10) einen Luftanschluß (14, 15) für eine externe Luftguelle hat.

6. Brennkraftmaschine nach Anspruch 5, dadurch gekennzeichnet, daß der Luftanschluß (14, 15) kurz vor der Lambdasonde (7, 8, 9, 10) angeordnet ist.
